Europäisches Patentamt

European Patent Office

Office européen des brevets

(19)

(11) Veröffentlichungsnummer: **0 001 296**
**B1**

(12) **EUROPÄISCHE PATENTSCHRIFT**

(21) Anmeldenummer: **78101019.4**

(22) Anmeldetag: **28.09.78**

(51) Int. Cl.³: **F 24 J 3/04, F 25 B 29/00**

(54) **Verfahren und Vorrichtung zur Nutzung von Wärme-, insbesondere Sonnenenergie für Raumheizung**

(30) Priorität: **28.09.77 DE 2743488**

(43) Veröffentlichungstag der Anmeldung:
**04.04.79 Patentblatt 79/07**

(45) Bekanntmachung des Hinweises auf die Patenterteilung:
**03.09.80 Patentblatt 80/18**

(84) Benannte Vertragsstaaten:
**BE CH DE FR GB LU SE**

(56) Entgegenhaltungen:
**DE - A - 2 600 853**
**US - A - 3 894 528**

(73) Patentinhaber: **Knoche, K.F., Dr.-Ing.**
**D - 5100 Aachen-Horbach (DE)**
**Trümper, Heinrich, Dipl.-Ing.**
**D - 7500 Karlsruhe (DE)**

(72) Erfinder: **siehe Anmelder**

(74) Vertreter: **Freischem, Werner, Dipl.-Ing.**
**An Gross St. Martin 2**
**D - 5000 Köln 1 (DE)**

Courier Press, Leamington Spa, England.

EP 0 001 296 B1

# Verfahren und Vorrichtung zur Nutzung von Wärme-, insbesondere Sonnenenergie für Raumheizung

Die Erfindung bezieht sich auf ein Verfahren zur Nutzung von Wärme-, insbesondere Sonnenenergie für Raumheizung, bei dem von einem Kollektor bei einem geringeren Temperaturniveau aufgenommene Wärme bei höherem Temperaturniveau an einen Heizungskreislauf abgegeben wird und auf eine Vorrichtung zur Durchführung dieses Verfahrens.

Es ist bekannt, daß Solarkollektoren die dargebotene Sonnenenergie umso besser ausnutzen können, je weniger ihre Betriebstemperatur von der Umgebungstemperatur abweicht. Bei erhöhter Kollektortemperatur werden die Wärmeverluste durch Konvektion und Strahlung so groß, daß die absorbierte Sonnenenergie nur zu einem geringen Teil oder gar nicht genutzt werden kann. Eine Betriebstemperatur des Solarkollektors, die nur wenig von der Umgebungstemperatur verschieden ist, bedingt andererseits den Einsatz von Wärmepumpen, die die angebotene Sonnenenergie auf ein für die Raumheizung notwendiges Temperaturniveau anheben. Solaranlagen in Kombination mit Wärmepumpen sind in verschiedenen Ausführungsformen bekannt. Die Wärmepumpen erfordern als Kompressionsmaschinen zu ihrem Antrieb elektrische oder mechanische Energie, die aus dem Stromversorgungsnetz oder von einem Verbrennungsmotor bereitgestellt werden muß.

Der vorliegenden Erfindung liegt die Aufgabe zugrunde, ein Verfahren zur Nutzung von Sonnenenergie oder aber auch Wärmeenergie aus der Luft, dem Wasser oder Erdreich für Raumheizung zu schaffen, das wirtschaftlicher arbeitet als die bekannten Verfahren und das mit einer betriebssicheren und und wenig Geräusche verursachenden Vorrichtung durchführbar ist.

Diese Aufgabe wird erfindungsgemäß dadurch gelöst, daß der Kollektor von einer armen Lösung eines Arbeitsstoffpaares durchströmt wird, wobei ein Teil der Lösung verdampft und zu einem mit reicher Lösung betreibenen ersten Absorber transportiert wird, von dem die in ihm erzeugte Absorptionswärme dem Heizungskreislauf zugeführt wird und daß die durch Verdampfen im kollector angereicherte arme Lösung in einem mindestens zweistufigen zweiten Absorber bzw. Resorber auf den Ausgangswert verarmt und die im ersten Absorber verarmte reiche Lösung in einem mindestens zweistufigen Austreiber auf den Ausgangswert angereichert, der in den Stufen des Austreibers ausgetriebene Dampf den entsprechenden Stufen des zweiten Absorbers und die in diesem erzeugte Absorptionswärme mindestens einer Stufe des Austreibers zugeführt wird.

Absorptionswärmepumpem lassen sich außerordentlich vorteilhaft in einem Kollektorkreislauf integrieren. Durch die Kombination des Kollektorkreislaufes mit einer Absorptionswärmepumpe treten überraschende Effekte auf, die einen besonders vorteilhaften Betrieb einer solchen Anlage ermöglichen. Insbesondere ist eine vorteilhafte Ausnutzung der zur Anreicherung der reichen Lösung benötigten und im Absorber des Kollektorkreislaufes, d.h., im Resorber, wiedergewonnenen Wärme möglich. Ferner ist durch die Speicherung der konzentrierten Lösung des Absorberkreislaufes und durch die Speicherung des kondensierten Dampfes eine Art verlustloser Energiespeicherung möglich. Die so gespeicherte Wärmeenergie wird frei, wenn die Konzentrationsdifferenz zwischen dem Konzentrat und dem Kondensat ausgeglichen wird.

Nach der US-A-3894 528 ist ein Verfahren zur Nutzung der Sonnenenergie bekannt, bei welchen der Sonnenkollektor von einer armen Lösung eines Arbeitsstoffpaares durchströmt wird, wobei ein Teil der Lösung verdampft, der Dampf einem Absorber zugeführt und die durch die Verdampfung augereicherte Lösung über eine zureite Leitung ebenfalls zum Absorber transportiert wird, von welchem die dort verarmte Lösung einem Heizungskreislauf zugeführt wird. Die im Absorber aufallende trochene luft wird dem kollektor zugeführt.

Bei dem Verfahren nach der Erfindung kann das Kältemittel einer einen Solarkollektor durchströmenden armen Lösung unmittelbar im Solarkollektor verdampfen und einem Absorber zugeführt werden, der die in ihm erzeugte Absorptionswärme an einen Heizungskreislauf abgibt.

Es ist aber auch möglich, den Solarkollektor oder aber auch einen anderen Kollektor mit einer armen, kalten Salzlösung zu beschicken und die im Kollektor erwärmte arme Salzlösung einem Entgaser zuzuführen. Der im Entgaser sich bildende Dampf des Kältemittels wird dann einem Absorber zugeführt, der die in ihm entwickelte Absorptionswärme einem heizungskreislauf abgibt.

Bei einer nach dem erfindungsgemäßen Verfahren arbeitenden Vorrichtung sind vorteilhafterweise der im Kollektorkreislauf angeordnete zweite Absorber, der zur besseren Unterscheidung auch Resorber genannt wird, und der im Absorberkreislauf angeordnete Austreiber mehrstufig ausgebildet, und die verschiedenen Stufen des Austreibers und des Resorbers werden von übereinander angeordneten Abschnitten eines Behälters gebildet, und die aus der letzten Stufe des Resorbers kommende arme Lösung wird als Heizmittel durch die ersten Stufen des Austrabers geführt.

Bei einer vorteilhaften Ausführungsform der erfindungsgemäßen Vorrichtung sind die Stufen des Resorbers konzentrisch um die Stufen des Austreibers angeordnet. Dadurch werden extrem kurze Dampfwege erreicht. Bei einer vorteilhaften Weiterbildung dieser Vorrichtung wird konzentrisch um den Resorber noch ein Entgaser angeordnet, der in einem gemeinsamen Behälter integriert ist. Bei dieser Vorrichtung sind die relativ kalten Zonen im äußeren Bereich, während die wärmeren Zonen zentral angeordnet sind.

Weitere Merkmale der Erfindung ergeben sich aus den Unteransprüchen.

In der folgenden Beschreibung wird die Erfindung unter Bezugnahme auf die Zeichnungen mehrerer Ausführungsbeispiele näher erläutert.

Fig. 1 zeigt eine zweistufig arbeitende Vorrichtung nach der Erfindung,

Fig. 2 und 3 zeigen Vorrichtungen mit mehrstufigem Resorber und mehrstufigem Austreiber, die in einem Behälter integriert sind,

Fig. 4 zeigt einen Behälter, in dem ein mehrstufiger Austreiber, ein mehrstufiger Resorber und ein Entgaser integriert sind.

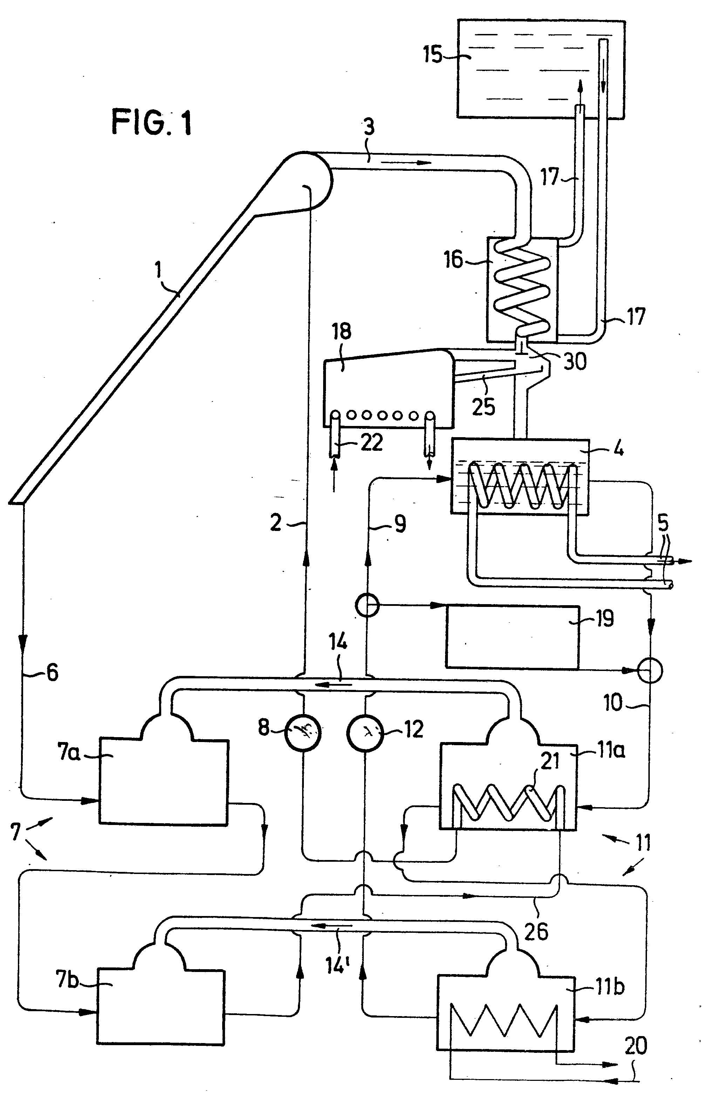

In der in Fig. 1 dargestellten Vorrichtung wird der Solarkollektor 1 über die Zuleitung 2 mit einer verdünnten, d.h., armen Lösung eines Zweistoffgemisches oder Arbeitsstoffpaares beschickt. Das Arbeitsstoffpaar besteht aus einem Kältemittel, zum Beispiel Wasser, und einem flüssigen Sorptionsstoff, zum Beispiel wässriger Lithiumbromidlösung. Im Solarkollektor 1 verdampft ein Teil der armen Lösung bei etwa Umgebungstemperatur. Der Dampf wird über die Dampfleitung 3 einem ersten Absorber 4 zugeführt, der mit einer reichen Lösung des Abreitsstoffpaares betrieben wird. Der Dampf wird dort in der konzentrierten Lösung absorbiert, und die dabei freigesetzte Wärme wird bei einem Temperaturniveau von etwa 35 bis 45°C an einen Heizungskreislauf 5 abgegeben.

Die durch die Verdampfung in Sonnenkollektor 1 angereicherte arme Lösung gelangt über die Ableitung 6 in einen zweiten zweistufigen Absorber 7 — im folgenden Resorber genannt — und wird dort durch Absorption von Wasserdampft auf ihre ursprüngliche ärmere Konzentration gebracht. Die zwei Stufen des Resorbers 7 sind mit 7a und 7b bezeichnet. Eine Pumpe 8 fördert die arme Lösung über die Zuleitung 2 in den Solarkollektor 1.

Die arme Lösung zirkuliert also im Kollektorkreislauf, der vom Kollektor 1, der Ableitung 6, dem Resorber 7, der Pumpe 8 und der Zuleitung 2 gebildet wird. Die arme Lösung hat beispielsweise einen Anteil von 5% bis 30% Lithiumbromid.

Die konzentrierte Lösung wird über eine Zuleitung 9 dem Absorber 4 zugeführt und gelangt über die Ableitung 10 zu einem zweistufigen Austreiber 11. Die zwei Stufen des Austreibers 11 sind mit 11a und 11b bezeichnet. Von dort wird die reiche Lösung mittels einer Pumpe 12 über die Zuleitung 9 in den Absorber 4 zurückgeführt. Die reiche Lösung zirkuliert also im Absorberkreislauf, der vom Absorber 4, der Ableitung 10, dem Austreiber 11, der Pumpe 12 und der Zuleitung 9 gebildet wird. Die reiche Lösung hat beispielsweise einen Anteil von 40% bis 70% Lithiumbromid.

Der Kollektorkreislauf 1, 6, 7, 8, 2 ist mit dem Absorberkreislauf 4, 10, 11, 12, 9 einerseits über die vom Kollektor 1 zum Absorber 4 führende Dampfleitung 3 und andererseits über die von den Stufen 11a und 11b des Austreibers 11 zu den Stufen 7a und 7b des Resorbers 7 führende Dampfleitungen 14, 14' verbunden.

Wird die im Sonnenkollektor 1 aufgenommene Wärme nicht sogleich zu Heizungszwecken benötigt, dann kann sie in einem Wasserspeicher 15 dadurch gespeichert werden, daß vor dem Absorber 4 ein Kondensator 16 angeordnet ist, der über den Kühlmittelkreislauf 17 mit dem Wasser des Wasserspeichers 15, zum Beispiel eines Schwimmbeckens, gekühlt wird. Die im Kondensator 16 erzeugte Kondensationswärme wird dem Wasserspeicher 15 zugeführt.

Im Kondensator 16 tritt eine Teilkondensation des Dampfes aus dem Sonnenkollektor 1 nur dann auf, wenn bei starker Sonneneinstrahlung der Druck P im Sonnenkollektor 1 so weit ansteigt, daß der Sättigungsdruck bei der Temperatur des Wasserspeichers 15 von etwa 10 bis 25°C überschritten wird. In diesem Fall erfolgt im Kondensator 6 eine Auskondensation des Dampfes, wobei das Kondensat in einen getrennten Kondensatspeicher 18 abgeleitet wird. Dadurch wird sowohl die reiche Lösung im Absorberkreislauf als auch die arme Lösung im Kollektorkreislauf angereichert.

Im Normalbetrieb wird der im Kollektor 1 gebildete Dampf in der reichen Lösung des Absorbers absorbiert, wobei die Lösung verarmt. Im Austreiber 11 wird durch Wärmezufuhr die Konzentration der reichen Lösung des Absorberkreislaufes auf ihren Ausgangswert zurückgeführt. Je nach den gewählten Drücken kann diese Wärmezufuhr bei einer Temperatur von 40 bis 100°C erfolgen. Ein Teil der vom Austreiber 11 benötigten Wärme wird aus der Absorption des ausgetriebenen Dampfes in der armen Lösung des im Kollektorkreislauf befindlichen Resorbers bereitgestellt, wenn diese auf einem ausreichenden Temperaturniveau erfolgt.

Die in der ersten Stufe 7a des Resorbers 7 des Kollektorkreislaufs erzeugte Absorptionswärme wird zu der ersten Stufe a des im Absorberkreislauf angeordneten Austriebers 11 gebracht. Der dadurch bewirkte Wärmeaustausch zwischen der armen und der reichen Lösung kann besonders einfach durchgeführt werden, wenn man die arme Lösung des Kollektorkreislaufes so reichlich im Kreislauf führt, daß der im Austreiber 11 ausgetriebene Dampft adiabatisch im Resorber 7 absorbiert werden kann, wobei sich die Absorberflüssigkeit soweit aufheizt, daß sie durch Wärmeabgabe an die reiche Lösung im Austreiber 11 diese zum Teil verdampft und konzentriert.

Diesen internen Wärmeaustausch führt man bei unterschiedlichen Drücken durch, wobei sich die für den Absorptionsvorgang günstigsten Drücke über die hydrostatische Höhe der Flüssigkeitssäule von selbst einstellt.

Reicht die im Solarkollektor 1 gebildete Dampfmenge für das Wärmeangebot im Heizungskreislauf 5 nicht aus, so kann durch Verdampfen des Kondensats aus dem Kondensatspeicher 18 zusätzlicher Dampft in der reichen Lösung absorbiert und die im ersten Absorber 4 gewonnene Absorptionswärme zusätzlich in den Heizungskreislauf 5 eingespeist werden. Zum Verdampfen des im Kondensatspeicher 18 befindlichen Kondensats kann Wärme aus dem Wasser des Wasserspeichers 15 bzw. Schwimmbeckens benutzt werden.

Bei anhaltender, intensiver Sonneneinstrahlung steigen zunächst Temperatur und Druck im Solarkollektor 1 an, wobei mit zunehmender Auskondensation des gebildeten Dampfes die Konzentration der Lösung im Kollektorkreislauf auf die im Absorberkreislauf ansteigen kann. In diesem Fall kann die Wärmezufuhr im Austreiber 11 entfallen, da das Konzentrationsgefälle zwischen der Flüssigkeit im Kollektorkreislauf und der im Absorberkreislauf eine genügende Anreicherung der Absorberlösung gewährlestet. Diese Fahrweise ist typisch für den Sommerbetrieb. Bei Langanhaltender, intensiver Sonneneinstrahlung kann dabei die Flüssigkeit im Absorberkreislauf weit über die bei Normalbetrieb typischen Konzentrationen angereichert und die konzentrierte, reiche Lösung in einem Konzentratspeicher 19 gespeichert werden. Die Speicherung reciher Lösung stellt ein Potential dar, aus dem, in Verbindung mit einer Niedertemperaturverdampfung, durch Absorption dieses Niedertemperaturdampfes Wärme auf einem höheren Temperaturniveau friegesetzt werden kann. Diese Art der "Wärmespeicherung" erfordert keinerlei Isolation gegen Wärmeverluste. Die zweite Stufe 11b des Austreibers 11 kann entweder direkt über eine Ölfeuerung, indirekt über einen Heizwasserkreislauf 20 hinreichender Temperatur oder aus der Abwärme eines Verbrennungsmotors, der beispielsweise wie beim TOTEM-System der dezentralisierten Stromversorgung dient, angetrieben werden.

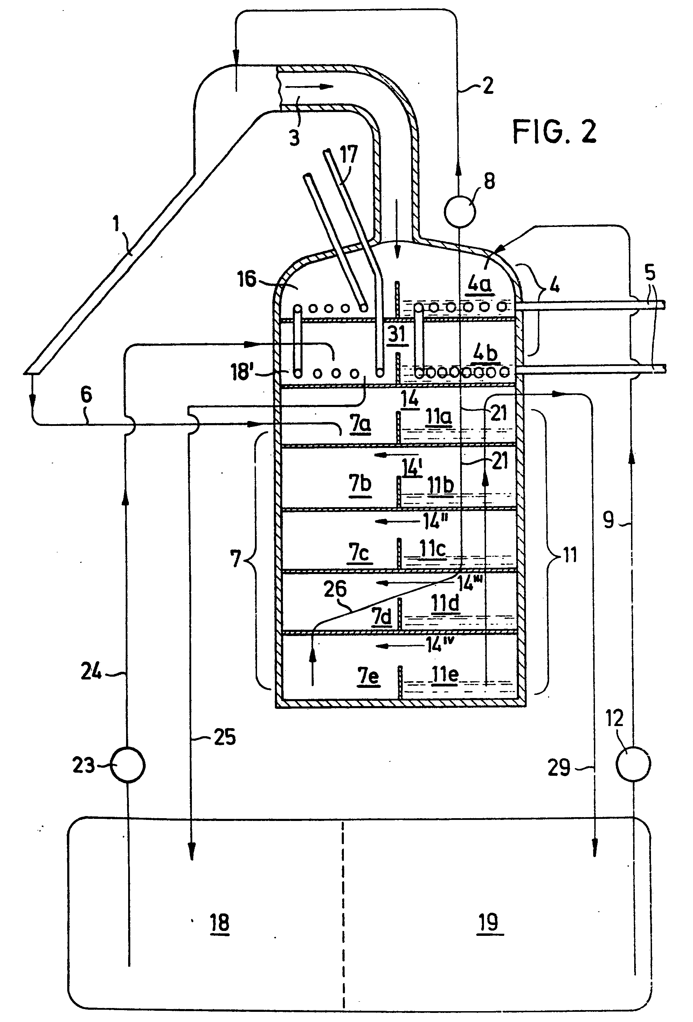

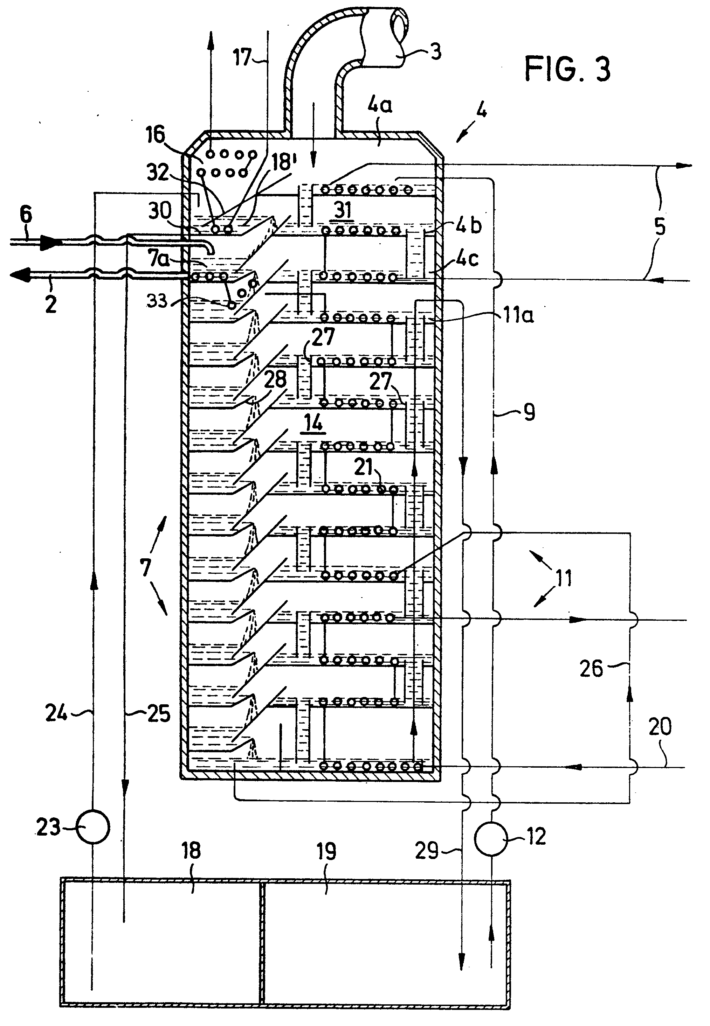

In den Figuren 2 und 3 haben gleichwirkende Teile die gleichen Bezugzeichen wie in Fig. 1.

Wie die Fig. 2 und 3 zeigen, können der mehrstufige Resorber 7 das Kollektorkreislaufes sowie der Kondensator 16 und der Absorber 4 und der mehrstufige Austreiber 11 des Absorberkreislaufes zu einer Einheit integriert werden. Die Absorption des im Sonnenkollektor 1 gebildeten Dampfes, das Austreiben des Sorptionsmittels aus der reichen Lösung sowie das Absorbieren des Sorptionsmittels erfolgt in mehreren Stufen, wobei die für die Absorptionsvorgänge günstigen Drücke sich durch die Höhen der Flüssigkeitssäulen selbsttätig einstellen.

In Fig. 2 ist im Prinzip eine Vorrichtung dargestellt, bei welcher der Kondensator 16, der Absorber 4 des Absorberkreislaufes, der mehrstufige Austreiber 11 und der mehrstufige Resorber 7 des Kollektorkreislaufes in einem Behälter untergebracht sind und die Stufen 7a, 7b, 7c, 7d und 7e des Resorbers 7 mit den Stufen 11a, 11b, 11c, 11d und 11e des Austreibers 11 über gemeinsame Dampfräume 14, 14', 14'', 14''' und 14'''' miteinander verbunden sind.

Die aus der letzten Stufe 7e kommende arme Lösung wird über die Leitung 26 einem Wärmetauscher 21 zugeführt, der die im Resorber 7 aufgenommene Absorptionswärme zumindest teilweise an die in den ersten Stufen 11a, 11b und 11c befindliche reiche Lösung des Absorberkreislaufes abgibt, bevor sie von der Pumpe 8 in den Solarkollektor 1 gepumpt wird. Die angereicherte arme Lösung gelangt über die Ableitung 6 in die erste Stufe 7a des Resorbers 7. Der im Solarkollektor 1 gebildete Dampf gelangt über die Dampfleitung 3 in den Kondensator 16 und gibt die im Solarkollektor 1 aufgenommene Wärme ganz oder teilweise an das Wasser des Kühlmittelkreislaufes 17 ab, so daß diese Wärme im Wasserspeicher bzw. im Schwimbecken 15 gespeichert wird. Der nicht kondensierende Dampf wird im Absorber 4 von der reichen Lösung absorbiert, und die dabei sich bildende Absorptionswärme wird dem Heizungskreislauf 5 zugeführt.

Aus der untersten Stufe 11e des dort fremd beheizten Austreibers 11 wird die konzentrierte reiche Lösung in den Konzentratspeicher 19 abgeführt. Mittels einer Pumpe 12 kann das Konzentrat in den ersten Absorber 4 wieder eingespeist werden.

Das im Kondensator 16 anfallende Kondensat wird in den Kondensatspeicher 18 abgeführt. Über eine Pumpe 23 kann das Kondensat dem Kondensator 16 zugeführt werden. Sofern der Wasserspeicher auf eine relative hohe Temperatur gebracht ist, dient das Kühlmittel des Kondensators als Heizmittel zum Verdampfen des Kondensats, so daß die im Absorber 4 sich bildende Absorptionswärmedem Heizungskreislauf 5 zugeführt werden kann. Das Kondensat 18 kann aber auch erforderlichenfalls durch eine anderes Heizmittel, beispielsweise Abwärme, verdampft und der so gebildete Dampf dem Absorber 4 zugeführt werden.

In der Fig. 3 ist eine im Prinzip ähnliche Vorrichtung dargestellt, jedoch ist bei dieser Zeichnung besser zu erkennen, daß sich die für die Absorptionsvorgänge günstigen Drücke durch die Höhen der Flüssigkeitssäulen selbsttätig einstellen. Im oberen Bereich des Behälters herrscht beispielsweise ein Druck von 0,015 bar, während im unteren Bereich des Behälters bzw. in der letzten Stufe des Austreibers 11 und in der letzten Stufe des im Kollektorkreislauf befindlichen Resorbers 7 ein Druck von 0,25 bar herrscht. bei diesem Ausführungsbeispiel ist der Behälter also ca. 2,50 m hoch.

Die über die Ableitung 6 kommende angereicherte arme Lösung des Kollektorkreislaufes gelangt in die oberste Stufe des Resorbers 7 und wird dadurch von Stufe zu Stufe nach unten ärmer, so daß jeweils in jeder Stufe von der armen Lösung Dampf absorbiert wird, der in den entsprechenden Stufen des Austreibers 11 aus der reichen Lösung ausgetrieben wird. Die unterschiedlichen Drücke stellen sich dadurch in den einzelnen Stufen des Austreibers ein, daß die von einer Stufe zur nächsten Stufe führenden Überläufe 27 unterhalb des Lösungsmittelspiegels einer jeden Stufe einmünden.

Auch im Resorberteil 7 sind die einzelnen Stufen durch Überläufe 28 miteinander verbunden. das Niveau dieser Überläufe liegt etwa in Höhe des Niveaus der reichen Lösung in der gleichen Stufe des Austreiberteils 11. Zur Nutzung der in der konzentrierten Lösung befindlichen und in den unteren Stufen des Austreibers 11 über die Beheizung 20 zugeführten Wärme ist die Konzentratableitung 29 von der untersten Stufe bis zur obersten Stufe des Austreibers 11 geführt, bis sie dann in den Konzentratspeicher mündet.

Wie sich aus Fig. 1 ergibt, ist es zweckmäßig, beispielsweise mittels eines Rückschlagventils 30 dafür zu sorgen, daß der im Kondensatspeicher 18 durch Inbetriebnahme der Beheizung 20 gebildete Dampf nicht über den Kondensator 16 in den Kollektorkreislauf gelangt, sondern sofort dem Absorber 4 zugeführt wird.

Wie die Fig. 2 zeigt, erfolgt das Verdampfen des aus dem Kondensatspeicher 18 mittels der Pumpe 23 hochgepumpten Kondensats in dem beheizbaren Kondensatbecken 18', das mit der unteren Stufe 4b des Absorbers 4 einen gemeinsamen Dampfraum 31 hat. Wird das im Kondensatbecken 18' befindliche Kondensat mittels des aus dem Wasserspeicher 15 kommenden angewärmten Wassers beheizt, dann wird der sich dabei bildende Dampf in der Stufe 4b des Absorbers 4 absorbiert und die so erzeugte Absorptionswärme dem heizungskrieslauf 5 zugeführt. Die Kondensatzuleitung 24 mündet im Kondensator 16, und das Kondensatbecken 18' ist vom Kondensator 16 durch eine geneigte Wand 32 getrennt, die so angeordnet ist, daß sie unterhalb des im Kondensatbecken 18' sich bildenden Niveaus endet und ein Durchlaß freibleibt, durch den das sich oberhalb des Durchlasses sammelnde Kondensat in das Kondensatbecken 18' gelangt. Damit ist ein Flüssigkeitsverschluß erzielt, der verhindert, daß der im Kondenstbecken 18' gebildete Dampf über den Kondensator 16 und die Dampfleitung 3 in den Kollektorkreislauf gelangt.

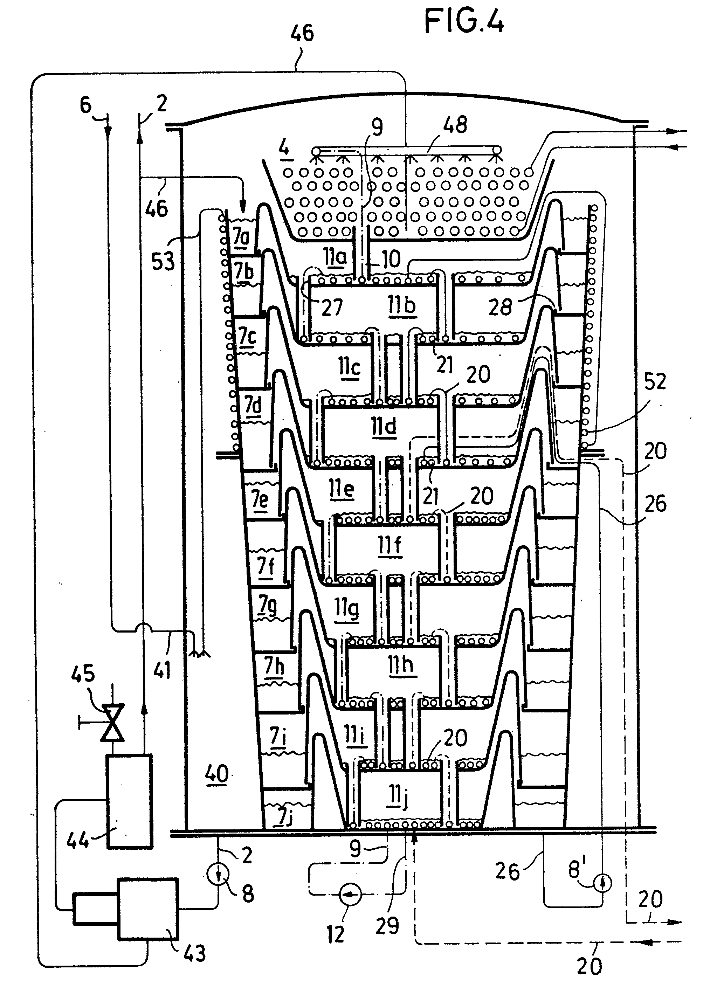

In Fig. 4 ist eine Vorrichtung nach der Erfindung dargestellt, die im Prinzip ähnlich arbeitet wie die Vorrichtung nach Fig. 3, bei der aber die arme Lösung nicht im Solarkollektor 1 bei niedrigem Druck verdampft, sondern bei der der Kollektor mit einer armen Salzlösung beschickt wird und die im Kollektor erwärmte Salzlösung einem Entgaser 40 zugeführt wird, der in einem den Absorber 4, die Stufen a bis j des Austreiberteils 11 und die Stufen a bis j des Resorbers 7 des Kollektorkreislaufs aufnehmenden Behälter integriert ist. Die Möglichkeit der Speicherung und der Energierückgewinnung aus einem Kondensatspeicher und einem Konzentratspeicher kann so wie bei den zuvor beschriebenen Ausführungsbeispielen vorgenommen werden. Anstelle eines Solarkollektors kann auch — zumindest teilweise — ein Kollektor treten, der Wärme aus der Luft, dem Erdreich oder Wasser aufnimmt.

Bei dem Ausführungsbeispiel nach Fig. 4 haben Teile, die gleich oder ähnlich wirken wie Teile der vorher beschriebenen Ausführungsbeispiele, gleich Bezugszeichen erhalten.

Auch bei der Vorrichtung nach Fig. 4 stellen sich die für die Absorptionsvorgänge günstigen Drücke durch die Höhen der Flüssigkeitssäulen selbsttätig ein.

Die vom Solarkollektor oder einem anderen Kollektor kommende Leitung 6 mündet in den Entgaser 40, während die zum Kollektor führende Leitung 2 vom Entgaser 40 über die Pumpe 8 führt.

Hinter der Pumpe 8 ist eine Strahlpumpe 43 und ein Abscheider 44 mit einem Entlüftungsventil 45 angeordnet. Zur Strahlpumpe 43 führt eine aus dem Absorber 9 kommende Entlüftungsleitung 46, welche Luft und Reste von nicht im Absorber 4 absorbierten Kühlmitteldampf dicht über den Flüssigkeitsspiegel im Absorber 4 absaugt.

Die Leitung 2 führt die im Entgaser 40 angereicherte arme Lösung zum Kollektor. Von dieser Leitung ist eine Leitung 46 abgezweigt, welche einen Teil der angereicherten armen Lösung der obersten Stufe a des Resorbers 7 zuführt. In den Stufen a bis j des Resorbers wird die angereicherte arme Lösung von Stufe zu Stufe ärmer, so daß jeweils in jeder Stufe von der armen Lösung Dampf absorbiert wird, der in den entsprechenden Stufen des Austreibers 11 aus der reichen Lösung ausgetrieben wird. Die unterschiedlichen Drücke stellen sich dadurch in den einzelnen Stufen des Austreibers 11 ein, daß die von einer Stufe zur nächsten Stufe führenden Überläufe 27 unterhalb des Lösungsmittelspiegels einer jeden Stufe einmünden.

Auch im Resorber 7 sind die einzelnen Stufen a bis j durch Überläufe 28 miteinander verbunden. Das Niveau der Überläufe 28 ist gegenüber dem Niveau der reichen Lösung in der gleichen Stufe des Austreiberteils 11 entsprechend den Dichteunterschieden verschoben. Zur Nutzung der in der konzentrierten Lösung befindlichen und in den unteren Stufen j bis e des Austreibers 11 über die Beheizung 20 zugeführten Wärme ist die Konzentratableitung 29 über Wärmetauscher oder Heizrohre in den einzelnen Stufen des Austreibers 11 von der untersten Stufe j bis zur obersten Stufe a geführt, bis sie dann in einen Konzentratspeicher mündet oder aber über eine Zuleitung 9 und ein Verteilerrohr 48 in den Absorber 4 gegeben wird.

Die aus der untersten Stufe j des Resorbers 7 entnommene verarmte arme Lösung wird über eine Leitung 26 den Wärmetauschern 21 in den oberen Stufen d, c, b und a des Austreibers 11 zugeführt, wo sie durch Wärmeübergang an die reiche Lösung diese bei niedrigem Druck verdampft. Anschließend wird sie über eine Kühlwicklung 52 im Gegenstrom mit der aus dem Entgaser kommenden kalten Lösung abgekühlt und danach über die Leitung 53 dem Entgaser 40 zugeführt. Im Entgaser 40 wird diese arme Lösung und zusätzlich der aus dem Kollektor kommende Strom einer armen Lösung teilweise verdampft und dabei abgekühlt. Der Dampf wird dem Absorber 4 zugeführt, wobei etwa mitgerissene Luft über die Entlüftungsleitung 46 und einer Strahlpumpe 43 aus dem Flüssigkeitskreislauf abgeschieden werden kann.

## Patentansprüche

1. Verfahren zur Nutzung von Wärme-, insbesondere Sonnenenergie für Raumheizung, bei der die von einem Kollektor (1) bei einem geringeren Temperaturniveau aufgenommene Wärme bei höherem Temperaturniveau an einen Heizungskreislauf (5) abgegeben wird, dadurch gekennzeichnet, daß der Kollektor (1) von einer armen Lösung eines Arbeitsstoffpaares durchströmt wird, wobei ein Teil der Lösung verdampft und zu einem mit reicher Lösung betriebenen ersten Absorber (4) transportiert wird, von dem die in ihm erzeugte Absorptionswärme dem Heizungskreislauf (5) zugeführt wird und daß die durch Verdampfen im Kollektor (1) angereicherte arme Lösung in einem mindestens zweistufigen zweiten Absorber (7a, 7b) bzw. Resorber auf den Ausgangswert verarmt und die im ersten Absorber (4) verarmte reiche Lösung in einem mindestens zweistufigen Austreiber (11a, 11b) auf den Ausgangswert angereichert, der in den Stufen des Austreibers (11a, 11b) ausgetriebene Dampf den entsprechenden Stufen des zweiten Absorbers (7a, 7b) und die in diesem erzeugte Absorptionswärme mindestens einer Stufe des Austreibers (11a, 11b) zugeführt wird.

2. Verfahren nach Anspruch 1, dadurch gekennzeichnet, daß das Kältemittel aus der armen Lösung bei niedrigem Druck im Kollektor (1) verdampft.

3. Verfahren nach Anspruch 1, dadurch gekennzeichnet, daß die im Kollektor (1) erwärmte arme Lösung einem Entgaser (40) zugeführt wird, in dem das Kältemittel bei niedrigem Druck teilweise verdampft.

4. Verfahren nach einem der Ansprüche 1 bis 3, dadurch gekennzeichnet, daß der aus der armen Lösung des Kollektorkreislaufs ausgetriebene Dampf zumindest teilweise einem Kondensator (16) zugeführt wird, der vom dem die Kondensationswärme aufnehmenden Wasser eines Wasserspeichers (15), insbesondere eines Schwimmbeckens, gekühlt wird.

5. Verfahren nach Anspruch 4, dadurch gekennzeichnet, daß das im Kondensator (16) anfallende Kondensat einem beheizbaren Kondensatspeicher (18) zuführbar ist.

6. Verfahren nach Anspruch 5, dadurch gekennzeichnet, daß die im Austrieber (11) angereicherte Lösung dem Konzentratspeicher (18) zuführbar ist.

7. Vorrichtung zur Durchführung des Verfahrens nach den Ansprüchen 1 bis 6, gekennzeichnet durch einen mit armer Lösung eines Arbeitsstoffpaares betriebenen Kollektorkreislauf, der sich zusammensetzt aus einer Zuleitung (2), dem Kollektor (1), einer Ableitung (6), einem mindestens zweistufigen Resorber (7) und einer Pumpe (8), und einer mit reicher Lösung betriebenen Absorberkreislauf, der sich zusammensetzt aus einer Zuleitung (9), dem Absorber (4), einer Ableitung (10), einem mindestens zweistufigen Austreiber (11) und einer Pumpe (12), wobei die Stufen des Austreibers (11) des Absorberkreislaufes mit den Stufen des Resorbers (7) des Kollektorkreislaufes (1—6—7—8—2) über Dampfleitungen oder -räume (14, 14') und mindestens die letzte Stufe des Resorbers (7) im Kollektorkreislauf über einen Wärmetauscher (21) mit mindestens der ersten Stufe des Austreibers (11) im Absorberkreislauf (4—10—11—12—9) verbunden sind.

8. Vorrichtung nach Anspruch 7, dadurch gekennzeichnet, daß der Kollektor ein Solarkollektor (1) ist, der über eine Dampfleitung (3) mit dem Absorber (4) verbunden ist.

9. Vorrichtung nach Anspruch 7, dadurch gekennzeichnet, daß die vom Kollektor (1) kommende, die erwärmte arme Lösung führende Leitung (6) in einen Entgaser (40) mündet, dessen Dampfraum mit dem Absorber (4) verbunden ist.

10. Vorrichtung nach Anspruch 8 oder 9, gekennzeichnet durch einen an der Dampfleitung (3) oder dem Dampfraum des Entgasers (40) angeschlossenen Kondensator (16), dessen Kühlmittelkreislauf (17) mit einem Wasserspeicher (15), insbesondere einem Schwimmbecken verbunden ist.

11. Vorrichtung nach Anspruch 10, dadurch gekennzeichnet, daß am Kondensator (16) ein das Kondensat aufnehmender beheizbarer Kondensatspeicher (18) angeordnet ist.

12. Vorrichtung nach einem der Ansprüche 7 bis 11, gekennzeichnet durch einen am Absorberkreislauf (4—10—11—12—9) anschließbaren Konzentratspeicher (19).

13. Vorrichtung nach einem der Ansprüche 7 bis 12, dadurch gekennzeichnet, daß ein mehrstufiger Austreiber (11) des Absorberkreislaufs und ein mehrstufiger Resorber (7) des Kollektorkreislaufs eine Einheit bilden, wobei die erste und jede weitere Stufe des Resorbers (7) und des Austreibers (11) je einen einheitlichen Druckraum (14) aufweisen.

14. Vorrichtung nach Anspruch 13, dadurch gekennzeichnet, daß die Stufen des Austreibers (11) und die Stufen des Resorbers (7) übereinander angeo-rdnet sind und die Stufen des Austreibers durch Überläufe (27) miteinander verbunden sind, die unterhalb des Niveaus der reichen Lösung der jeweils nachfolgenden Stufe münden.

15. Vorrichtung nach Anspruch 14, dadurch gekennzeichnet, daß die Stufen des Resorbers (7) durch Überläufe (28) mit der nächstfolgenden Stufe verbunden sind, deren Überlaufniveau sich etwa in Höhe des Überlaufniveaus der Überläufe (27) des Austreibers (11) befinden.

16. Vorrichtung nach einem der Ansprüche 10 bis 15, dadurch gekennzeichnet, daß der Kondensator (16) und der Absorber (4) oberhalb der ersten Stufe des Resorbers (7) und des Austreibers (11) angeordnet sind und miteinander verbundene Räume bilden.

17. Vorrichtung nach einem der Ansprüche 10 bis 16, dadurch gekennzeichnet, daß der Kondensator (16) über eine Kondensatableitung (25) mit dem Kondensatspeicher (18) verbunden ist, aus dem über eine Kondensatzuleitung (24) Kondensat dem Kondensator (16) zuführbar ist. (Fig. 2 und 3).

18. Vorrichtung nach einem der Ansprüche 7 bis 17, dadurch gekennzeichnet, daß die letzte Stufe des Resorbers (7) über eine Verbindungsleitung (26) mit dem in den ersten Stufen des Austreibers (11) angeordneten Wärmetauscher (21) verbunden ist.

19. Vorrichtung nach einem der Ansprüche 7 bis 18, dadurch gekennzeichnet, daß aus der letzten Stufe des Austreibers (11) eine Konzentratableitung (29) zum Konzentratspeicher (19) führt.

20. Vorrichtung nach Anspruch 19, dadurch gekennzeichnet, daß die Konzentratableitung (29) aus der letzten, beheizbaren Stufe des Austreibers (11) durch die übrigen Stufen des Austreibers (11) hindurchgeführt ist.

21. Vorrichtung nach einem der Ansprüche 13 bis 20, dadurch gekennzeichnet, daß der Absorber (4) mehrere Stufen (a, b, c) aufweist, rom denen die erste Stufe (a) mit dem Kondensator (16), die mittlere Stufe (b) mit dem Kondensatbecken (18') und der darunter befindlichen ersten Stufe (a) des Resorbers (7) und die letzte Stufe (c) mit der ersten Stufe (a) des Resorbers (7) jeweils einen gemeingamen Dampfraum (31, 14) bildet (Fig. 2 und 3).

22. Vorichtung nach Anspruch 21, dadurch gekenn-zeichnet, daß die Kondensatzuleitung (24) in den unteren Teil (32) des Kondensators (16) mündet.

23. Vorrichtung nach einem der Ansprüche 7 bis 22, dadurch gekennzeichnet, daß in den oberen Stufen (a, b) des Resorbers (7) ein am Wärmetauscher (21) angeschlossener, von der armen Lösung durchflossener Wärmetauscher (33 bzw. 52) angeordnet ist. (Fig. 3).

24. Vorrichtung nach einem der Ansprüche 13 bis 23, dadurch gekennzeichnet, daß die Stufen (a bis j) des Resorbers (7) konzentrisch zu den Stufen (a bis j) des Austreibers (11) angeordnet sind. (Fig. 4).

25. Vorrichtung nach Anspruch 24, dadurch gekennzeichnet, daß die wannenartigen Stufen des Austreibers (11) im Querschnitt von oben nach unten kleiner werden.

26. Vorrichtung nach einem der Ansprüche 13 bis 25, dadurch gekennzeichnet, daß der mehrstufige Austreiber (11), der mehrstufige Resorber (7) und den Entgaser (40) in einem Behälter untergebracht sind.

27. Vorrichtung nach Anspruch 24, 25 und 26, dadurch gekennzeichnet, daß der Entgaser (40) konzentrisch um den Resorber (7) und der Absorber (4) über der ersten Stufe (a) des Austreibers (11) und des Resorbers (7) angeordnet ist.

**Revendications**

1. Procédé pour l'utilisation de la chaleur et en particulier de l'énergie solaire dans lequel la chaleur absorbée par un collecteur (1) à un faible niveau de température est transmise à un circuit de chauffage (5) à un niveau supérieur de température caractérisé en ce que le collecteur (1) est parcouru par une solution pauvre d'un binaire, une partie de la solution étant évaporée et transportée à un premier absorbeur (4) fonctionnant avec une solution riche, à partir duquel la chaleur d'absorption qui s'y produit est amenée au circuit de chauffage (5), et en ce que la solution pauvre enrichie par évaporation dans le collecteur (1) est appauvrie à la valeur de départ dans un deuxième absorbeur ayant au moins deux niveaux (7a, 7b) ou résorbeur, et la solution riche appauvrie dans le premier absorbeur (4) est enrichie à la valeur de départ dans un évacuateur ayant au moins deux niveaux (11a, 11b); la vapeur évacuée dans les niveaux de l'évacuateur (11a, 11b) est amenée aux niveaux correspondants du deuxième absorbeur (7a, 7b), et la chaleur d'absorption produite dans cet absorbeur est amenée au moins à un niveau de l'évacuateur (11a, 11b).

2. Procédé selon la revendication 1, caractérisé en ce que l'agent frigorifique est évaporé de la solution pauvre à faible pression dans le collecteur (1).

3. Procédé selon la revendication 1, caractérisé en ce que la solution pauvre réchauffée dans le collecteur (1) est amenée à un dégazeur (40) dans lequel l'agent frigorifique est en partie évaporé à faible pression.

4. Procédé selon l'une des revendications 1 à 3 caractérisé en ce que la vapeur évaporée de la solution pauvre du circuit de collecteur est amenée au moins en partie à un condensateur (16) qui est refroidi par l'eau d'un réservoir à eau (15), en particulier d'une piscine, prise en chaleur de condensation.

5. Procédé selon la revendication 4, caractérisé en ce que le condensé se trouvant dans le condensateur (16) peut être amené dans un réservoir de condensé (18) pouvant être chauffé.

6. Procédé selon la revendication 5, caractérisé en ce ce que la solution enrichie dans l'évacuateur (11) peut être amenée au réservoir de condensé (18).

7. Dispositif pour la réalisation du procédé d'après les revendications 1 à 6 caractérisé par un circuit de collecteur fonctionnant avec une solution pauvre d'un binaire, circuit qui se compose d'une alimentation (2), du collecteur (1), d'une conduite (dérivation) (6), d'un résorbeur ayant au mois deux niveaux (7), et d'une pompe (8), et par un circuit d'absorbeur fonctionnant avec une solution riche, circuit qui se compose d'une alimentation (9), de l'absorbeur (4), d'une conduite (dérivation) (10), d'une évacuateur ayant au moins deux niveaux (11) et d'une pompe (12), les niveaux de l'évacuateur (11) du circuit d'absorbeur étant reliés aux niveaux du résorbeur (7) du circuit de collecteur (1, 6, 7, 8, 2) par l'intermédiaire de conduites ou chambres de vapeur (14, 14'), et au moins le dernier niveau du résorbeur (7) dans le circuit de collecteur étant relié au moins au premier niveau de l'évacuateur (11) dans le circuit d'absorbeur (4, 10, 11, 12, 9) par l'intermédiaire d'un échangeur de chaleur (21).

8. Dispositif selon la revendication 7, caractérisé en ce que le collecteur est un collecteur solaire (1) qui est relié à l'absorbeur (4) par une conduite de vapeur (3).

9. Dispositif selon la revendication 7 caractérisé en ce que la conduite (6) venant du collecteur (1) et amenant la solution pauvre chauffée débouche dans un dégazeur (40) dont la chambre de vapeur est reliée à l'absorbeur (4).

10. Dispositif selon les revendications 8 ou 9, caractérisé par un condensateur (16) relié à la conduite de vapeur (3) ou à la chambre de vapeur du dégazeur (40), condensateur dont le circuit d'agent frigorifique (17) est relié à un réservoir à eau (15), en particulier une piscine.

11. Dispositif selon revendication 10, caractérisé en ce que dans le condensateur (16) est disposé un réservoir de condensé (18) absorbant le condensé et pouvant être chauffé.

12. Dispositif suivant l'une des revendications 7 à 11, caractérisé par une réservoir de concentré (19) pouvant se reaccorder au circuit d'absorbeur (4, 10, 11, 12, 9).

13. Dispositif suivant l'une des revendications 7 à 12, caractérisé en ce que un évacuateur à plusieurs niveaux (11) du circuit absorbeur, et un résorbeur à plusieurs niveaux (7) du circuit collecteur, forment un ensemble dans lequel le premier niveau et chaque niveau suivant du résorbeur (7) et de l'évacuateur (11) présentent chacun une "chambre de pression" homogène (14).

14. Dispositif suivant la revendication 13, caractérisé en ce que les niveaux de l'évacuateur (11) et les niveaux du résorbeur (7) sont disposés les uns au dessus des autres, et les niveaux de l'évacuateur sont reliés les uns aux autres par l'intermédiaire de "déversoirs" (27) qui débouchent en dessous du niveau de la solution riche de chaque niveau suivant.

15. Dispositif suivant la revendication 14, caractérisé en ce que les niveaux du résorbeur (7) sont reliés aux niveaux suivant par l'intermédiaire de "déversoirs" (28) dont les niveaux de trop-plein se situent environ à la hauteur du niveau de trop-plein des "déversoirs" (27) de l'évacuateur (11).

16. Dispositif suivant l'une des revendications 10 à 15, caractérisé en ce que le condensateur (16) et l'absorbeur (4) sont disposés au dessus du premier niveau du résorbeur (7) et de l'évacuateur (11) et forment des "chambres" reliées les unes aux autres.

17. Dispositif suivant l'une des revendications 10 à 16, charactérisé en ce que le condensateur (16) est relié par une conduite de condensé (25) au réservoir de condensé (18) à partir duquel, par l'intermédiaire d'une amenée de condensé (24) on peut amener du condensé dans le condensateur (16) (figures 2 et 3).

18. Dispositif suivant l'une des revendications 7 à 17, charactérisé en ce que le dernier niveau du résorbeur (7) est relié par une conduite de liaison (26) à l'échangeur de chaleur (21) disposé dans les premiers niveaux de l'évacuateur (11).

19. Dispositif suivant l'une des revendications 7 à 18, caractérisé en ce qu'une conduite de concentré (29) mène du dernier niveau de l'évacuateur (11) au réservoir de concentré (19).

20. Dispositif selon la revendication 19, caractérisé en ce que la conduite de concentré (29) venant du dernier niveau chauffable de l'évacuateur (11) passe à travers les autres niveaux de l'évacuateur (11).

21. Dispositif suivant l'une des revendications 13 à 20, caractérisé en ce que l'absorbeur (4) présente plusieurs niveaux (a, b, c) dont le premier niveau (a) avec le condensateur (16), le niveau intermédiaire (b) avec le réservoir de condensé (18') et le premier niveau (a) du résorbeur (7) qui se trouve en dessous, et le dernier niveau (c) avec le premier niveau (a) du résorbeur (7), forment chaque fois une chambre de vapeur commune (31, 14). (figures 2 et 3).

22. Dispositif d'après la revendication 21, caractérisé en ce que l'amenée de condensé (24) débouche dans la partie inférieure (32) du condensateur (16).

23. Dispositif selon l'un des revendications 7 à 22, caractérisé en ce que dans les niveaux supérieurs (a, b) du résorbeur (7) est disposé un échangeur de chaleur (33 ou 52) raccordé à l'échangeur de chaleur (21) et parcouru par la solution pauvre.

24. Dispositif selon l'une des revendications 13 à 23, caractérisé en ce que les niveaux (a à j) du résorbeur (7) sont disposés de façon concentrique par rapport aux niveaux (a à j) de l'évacuateur (11). (Figure 4).

25. Dispositif selon la revendication 24, caractérisé en ce que les niveaux en forme de curve de l'évacuateur (11) ont un diamètre (section) qui se rétrécit de haut en bas.

26. Dispositif selon l'une des revendications 13 à 25, caractérisé en ce que l'évacuateur (11) à plusieurs niveaux, le résorbeur (7) à plusieurs niveaux et le dégazeur (40) sont logés dans un' réservoir.

27. Dispositif selon les revendications 24, 25 et 26, caractérisé en ce que le dégazeur (40) est disposé de façon concentrique autour du résorbeur (7), et l'absorbeur (4) est disposé au dessus du premier niveau (a) de l'évacuateur (11) et du résorbeur (7).

## Claims

1. Process for the use of heat-, in particular solar energy for room heating, whereby the heat absorbed from a collector (1) at a low temperature level is given off at a higher temperature level to a heating circulation (5), thereby characterized in that said collector (1) is flowed through by a diluted solution of a pair of working substances, whereby a part of said solution vaporizes and is transported to a first absorber (4) operated with concentrated solution, from which the absorption heat therein produced is fed to said heating circulation (5) and in that said diluted solution concentrated by vaporizing in said collector (1) dilutes in an at least two-stage second absorber (7a, 7b) resp. resorber to the initial value and said diluted concentrate solution in the first absorber (4) concentrated in an at least two-stage desorber (11a, 11b) to the initial value, the vapour desorbed in the stages of said desorber (11a, 11b) fed to the corresponding stages of the second absorber (7a, 7b) and the absorption heat produced therein fed to at least one stage of said desorber (11a, 11b).

2. Process according to claim 1, thereby characterized in that the refrigerant vaporizes from said diluted solution at low pressure in said collector (1).

3. Process according to claim 1, thereby characterized in that said diluted solution heated in said collector (1) is fed to a gas expeller (40), wherein said refrigerant partially vaporizes at low pressure.

4. Process according to one of the claims 1 to 3, thereby characterized in that the vapour desorbed from the diluted solution of the collector circulation is fed at least partially to a condenser (16) which is refrigerated by the water of a water storage (15) absorbing in the heat of condensation, in particular of a swimming pool.

5. A process according to claim 4, thereby characterized in that the condensate occurring in said condenser (16) is feedable to a heated condensate tank (18).

6. Process according to claim 5, thereby characterized in that the concentrated solution in the desorber (11) is feedable to said concentrate tank (18).

7. Device for the execution of the process according to claims 1 to 6, characterized by a collector circulation operated with diluted solution of a pair of working substances, which is composed of an inlet (2), said collector (1), an outlet (6), an at least two-stage resorber (7) and a pump (8) and an absorber circulation operated with concentrated solution, which is composed of an inlet (9), said absorber (4), an outlet (10), an at least two-stage desorber (11) and a pump (12), whereby the stages of said desorber (11) of the absorber circulation are connected with the stages of the resorber (7) of the collector circulation (1, 6, 7, 8, 2) via vapour supply pipes or spaces (14, 14') and at least the last stage of the resorber (7) in the collector circulation via a heat exchanger (21) with at least the first stage of said desorber (11) in the absorber circulation (4, 10, 11, 12, 9).

8. Device according to claim 7, thereby characterized in that said collector is a solar collector (1), which is connected via a vapour supply pipe (3) with said absorber (4).

9. Device according to claim 7, thereby characterized in that the pipe (6) coming from collector (1) feeding the heated diluted solution opens into a gas expeller (40) whereof the vapour space is connected with said absorber (4).

10. Device according to claim 8 or 9, characterized by a condenser (16) connected to said vapour supply pipe (3) or the vapour space of said gas expeller (40), whereof the refrigerant circulation (17) is connected with a water storage (15), in particular a swimming pool.

11. Device according to claim 10, thereby characterized in that a heatable condensate tank (18) absorbing said condensate is arranged on said condenser (16).

12. Device according to one of the claims 7 to 11, characterized by a concentrate tank (19) connectable to the absorber circulation (4—10—11—12—9).

13. Device according to one of the claims 7 to 12, thereby characterized in that a multi-stage desorber (11) of the absorber circulation and a multi-stage resorber (7) of the collector circulation form one unit, whereby the first and every further stage of said resorber (7) and said desorber (11) have respectively a unified pressure chamber (14).

14. Device according to claim 13, thereby characterized in that the stages of said desorber (11) and the stages of said resorber (7) are arranged above one another and the stages of the desorber are connected with one another via overflows (27) which open into below the level of the concentrated solution of the respective subsequent stage.

15. Device according to claim 14, thereby characterized in that the stages of said resorber (7) are connected via overflows (27) with the next subsequent stage, whereof said overflow levels are at approximately the height of the overflow level of said overflows (27) of said desorber (11).

16. Device according to one of the claims 10 to 15, thereby characterized in that said condenser (16) and said absorber (4) are arranged above the first stage of said resorber (7) and said desorber (11) and form interconnected spaces.

17. Device according to one of the claims 10 to 16, thereby characterized in that said condenser (16) is connected via a condensate outlet (25) with the condensate tank (18) from which condensate is feedable via a condensate inlet (24) to said condenser (16). (Fig. 2 and 3).

18. Device according to one of the claims 7 to 17, thereby characterized in that the last stage of said resorber (7) is connected via a connecting piping (26) with the heat exchanger (21) arranged in the first stages of said desorber (11).

19. Device according to one of the claims 7 to 18, thereby characterized in that a concentrate outlet (29) from the last stage of said desorber (11) leads to said concentrate tank (19).

20. Device according to claim 19, thereby characterized in that said concentrate outlet (29) is passed through from the last, heatable stage of said desorber (11) through the remaining stages of said desorber (11).

21. Device according to one of the claims 13 to 20, thereby characterized in that said absorber (4) has several stages (a, b, c), whereof respectively the first stage (a) forms a common vapour space (31, 14) with said condenser (16), the middle stage (b) with said condensate tank (18) and the thereunder located first stage (a) of said resorber (7) and the last stage (c) with the first stage (a) of said resorber (7). (Fig. 2 and 3).

22. Device according to claim 21, thereby characterized in that the condensate inlet (24) opens into the lower part (32) of said condenser (16).

23. Device according to one of the claims 7 to 22, thereby characterized in that the upper stages (a, b) of said resorber (7) a heat exchanger (33 resp. 52) flowed through by the diluted solution is arranged connected to the heat exchanger (21).

24. Device accoridng to one of the claims 13 to 23, thereby characterized in that the stages (a to j) of said resorber (7) are arranged concentric to said stages (a to j) of said desorber (11). (Fig. 4).

25. Device according to claim 24, thereby characterized in that the troughlike stages of said desorber (11) become smaller in cross section from top to bottom.

26. Device according to one of the claims 13 to 25, thereby characterized in that said multistage desorber (11), said multi-stage resorber (7) and said gas expeller (40) are housed in one container.

27. Device according to claim 24, 25 and 26, thereby characterized in that said gas expeller (40) is arranged concentrically around said resorber (7) and said absorber (4) above the first stage of said desorber (11) and said resorber (7).

FIG. 1

0 001 296

0 001 296

FIG. 2

FIG. 3

FIG.4

0 001 296